Europäisches Patentamt

European Patent Office

Office européen des brevets

(11) Publication number: 0 336 588
A1

## (12) EUROPEAN PATENT APPLICATION

(21) Application number: 89302628.6

(22) Date of filing: 16.03.89

(51) Int. Cl.4: C08J 9/14 , C08K 5/02 , //C08L61/04

(30) Priority: 17.03.88 GB 8806400

(43) Date of publication of application:
11.10.89 Bulletin 89/41

(84) Designated Contracting States:
AT BE CH DE ES FR GB IT LI NL SE

(71) Applicant: BP Chemicals Limited
Belgrave House 76 Buckingham Palace Road
London, SW1W 0SU(GB)

(72) Inventor: Hamilton, Alan James
47 Coleridge Avenue
Penarth South Glamorgan(GB)

(74) Representative: Krishnan, Suryanarayana
Kalyana et al
BP INTERNATIONAL LIMITED Patents &
Agreements Division Chertsey Road
Sunbury-on-Thames Middlesex TW16
7LN(GB)

(54) A process for producing phenolic foams.

(57) This invention relates to a process for producing closed cell phenol-formaldehyde foams using a mixture of Freon 113 and Freon 114 as the blowing agent. The specific blowing agent used improves the performance and processability of these foams.

EP 0 336 588 A1

## A PROCESS FOR PRODUCING PHENOLIC FOAMS

This invention relates to a process for producing closed cell phenol-formaldehyde foams, hereafter referred to as phenolic foams having low thermal conductivity.

Phenolic foams are finding increasing use in building applications where their thermal insulation and fire resistant properties are of value. The preparation of such phenolic foams has been previously described and involves mixing a phenol formaldehyde resin of the type known in the art as a resole with a blowing agent, a cell stabiliser and a hardener which is typically a mineral or strong organic acid. The mixed ingredients are usually poured into a mould which is then placed in a warm oven to foam, cure and set. Alternatively, the mixed ingredients can be converted to cured foam in a continuous process, for example, by depositing the mixed ingredients onto a moving belt.

Cell stabilisers are also referred to in the art as surfactants or cell stabilising surfactants. For convenience the term cell stabiliser will be used in the present specification.

Cell stabilisers have been previously proposed in UK Patent Nos 1,537,947; 1,062,850 and 1,274,148 and have included ethoxylated derivatives of castor oil, typically prepared by reacting 40 molecules of ethylene oxide with one molecule of castor oil. Siloxane oxyalkylene copolymers have also been proposed in French Patent No 2,354,361.

A particular method of producing closed cell phenolic foams of low thermal conductivity is claimed and described in our published European Patent Application No. 0170357.

In the prior art process it is conventional to use chlorofluorohydrocarbons (also known as fluorocarbons and commercially sold as "Freons" (Registered Trade Mark)) as blowing agents. The most widely used Freon is trichlorofluoromethane (also known as Freon 11). Freon 11 can be used either alone or in combination with other Freons such as Freon 12, 13, 13 B1, 14, 22, 113, 114, 500, 502 or 503 or a series of halogenated hydrocarbons sold under the trade name ARCTON (Registered Trade Mark). The preferred agent with most phenolic foam systems is a mixture of Freon 11 and Freon 113 (trichlorotrifluoroethane). Use of such blowing agents is described in EP 170357, GB 2125045, GB 2055845, EP 066967 and USP 4133931.

It has now been found that by using a specific combination of fluorocarbons the processing and performance of these phenolic foams can be significantly improved.

It is thus an object of the present invention to provide a process for producing either block or laminated phenolic foams having thermal conductivities lower than hitherto achieved.

Accordingly, the present invention comprises a process for the production of closed cell phenolic foams of low thermal conductivity by curing a phenolic resin with a blowing agent, a hardener, a cell stabilizer and a solvent compatible with the resin, characterised in that the blowing agent comprises a mixture of trichlorotrifluoroethane and dichlorotetrafluoroethane.

The phenol formaldehyde resins also known as 'resoles' can be prepared by condensing 1 mole of a phenolic compound with 1 to 2.5 moles of an aldehyde using a base catalyst, e.g. sodium hydroxide. The phenolic compound may be substituted or unsubstituted and may be selected from one or more of phenol, the cresols, whether ortho-, meta-, para- or mixtures thereof, e.g. nonyl phenols, styrenated phenols and bromophenols. The aldehyde is suitably formaldehyde or furfurylaldehyde. The resoles are preferably prepared by condensing 1 mole of phenol with 1.2 to 1.8 moles of formaldehyde.

Trichlorotrifluoroethane and dichlorotetrafluoroethane are commercially sold as Freon 113 and Freon 114 respectively and for convenience will hereafter be referred to by said trade name.

In the blowing agent described above, the ratio by weight of Freon 113 to Freon 114 is suitably in the range from 50 : 50 to 95 : 5, preferably from 70 : 30 to 90 : 10. The amount of the blowing agent used is suitably from 5 : 125 to 25 : 125 based on the total wt of the mixture to be cured. Within this range the precise amount of blowing agent used will depend upon a number of factors such as the density and strength of the foam required, the production technique and the type of phenolic resin used.

The phenolic resins may incorporate during their preparation conventional additives to improve the performance of the foam. Examples of such additives include one or more of urea, melamine, dicyandiamide and furfurylalcohol which serve e.g. to mop up excess formaldehyde in the resin.

The solvents referred to above can be used either during the preparation of the phenolic resin or during the foaming of the resin. Broadly, the solvents may be used to control the viscosity of the resin, to control the foaming process and to impart desirable properties to the foam. Examples of such solvents include water, glycols, esters of glycols, those with fire retardant characteristics, e.g. organic phosphorus compounds.

According to a further embodiment the present invention comprises a process for the production of phenolic foams by curing a phenolic resin with a blowing agent, a hardener, a cell stabilizer and a solvent compatible with the resin, characterised in that in the curing mixture

(a) the phenolic resin has an aldehyde to phenolic compound mole ratio from 1:1 to 2.5:1 and in combination with any of the solvent inherently present therein has a viscosity of 500-10,000 centistokes at 25°C,

(b) the blowing agent is a mixture of Freon 113 and Freon 114,

(c) the hardener is a mineral acid,

(d) the cell stabilizer is derived by oxyalkylating castor oil or a hydrogenated derivative thereof with ethylene oxide or mixtures thereof with propylene oxide and/or butylene oxide,

(e) the total compatible solvents content of the reaction mixture inclusive of that present in the resin is from 7-35% by weight of which at least 40% by weight is water, and

(f) the temperature within the mass of the curing resin mixture does not exceed 85°C.

The choice of phenolic compounds and aldehyde reactants in the context of this embodiment are the same as described previously.

For the purposes of this embodiment and the next embodiment below of the present invention, it will be understood by those skilled in the art that phenolic resins of relatively higher viscosity may be used as starting materials provided that the total compatible solvent content of the curing reaction mixture is maintained within the specified range. It is however convenient to use a phenolic resin which inherently contains a compatible solvent and has a viscosity of 1000-10000 centistokes.

The phenolic resin (resole) used suitably has a viscosity of 1000 to 8000 centistokes, preferably 1000-5000 centistokes at 25°C due to the solvent present therein. The solvent in the resin is suitably a polar solvent and may be water. The water or solvent content of the resin may be from 8-32% by weight, typically from 15 to 27% by weight although some or all of the water content may be replaced by other solvents compatible with the resin. For instance, if the resin has a water content of 20% by weight, up to 50% of this water content may be replaced by other compatible solvents. Examples of such compatible solvents include aliphatic or alicyclic hydroxy compounds and esters thereof, and organic phosphorus compounds. Specifically the hydroxy compounds may be selected from ethylene glycol, propylene glycol, diethylene glycol and dipropylene glycol, and the ester is suitably that derived from mono, di or polycarboxylic acids and may be a phthalate ester such as the dimethyl phthalates e.g. dimethylisophthalates.

The blowing agent is a mixture of trichlorotrifluoroethane and dichlorotetrafluoroethane (sold e.g. under the trade mark of Freon 113 and Freon 114 respectively).

The mixed blowing agent of the present invention gives products of lower thermal conductivity particularly after ageing than those obtained using halocarbon blowing agents such as Freon 11 or those that contain Freon 11. Test methods have been devised to simulate the thermal conductivity performance of a foam upon ageing for many years. These test methods accelerate the ageing process by cutting the samples down to a thickness of 25 mm and by holding the samples at an elevated temperature of 60°C. The thermal conductivity, k, is measured at an average temperature of 23.85°C (75°F) with the hot plate at 37.7°C (100°F) and the cold plate at 10°C (50°F) using a model 88 thermal analyser made by the Anacon Corporation of Ashland, Massachusetts, USA. The time that the samples are aged for is e.g. 90 days. Foams prepared using the present process have k values superior to those of foams obtained using conventional blowing agents when tested as above. It should be noted that the lower the thermal conductivity value of a foam the better is its thermal insulation performance.

The hardener is suitably an aqueous mineral acid, preferably aqueous sulphuric acid or phosphoric acid, most preferably an aqueous solution containing 45-65% by weight of sulphuric acid. The total compatible solvent content of the reaction mixture inclusive e.g. of the water or other solvents present in the phenolic resin and the water present in the aqueous hardener used is from 7 to 35% by weight, preferably from 15-32% by weight. Of the total solvent at least 40% by weight is water, preferably at least 50% by weight is water.

Castor oil is a glyceride in which the glycerol is esterified predominantly with ricinoleic acid. The cell stabilizer is prepared from castor oil as such or from a hydrogenated derivative thereof. The hydrogenated derivative may be either fully or partially hydrogenated with respect to the unsaturation in the ricinoleic acid moiety in castor oil. Thus, castor oil or its hydrogenated derivative can be oxyalkylated with ethylene oxide or mixtures thereof with propylene oxide and/or butylene oxide. Where a mixture of propylene oxide and ethylene oxide is used the oxyalkylated product suitably contains up to 60 propylene oxide units and up to 200 ethylene oxide units to form the cell stabilizer. The cell stabiliser preferably contains up to 40 propylene oxide units and from 20 to 100 ethylene oxide units. The oxyalkylene units can be random or arranged in

EP 0 336 588 A1

blocks, the former being preferred.

The curing reaction is exothermic and the resin and the hardener are chosen depending upon the nature of the final end product and the production technique to be used. Larger surface to volume ratios result in increased rates of cooling of the mass. Consequently, the combination of resin and hardener chosen will depend to a large extent upon the surface to volume ratio of the desired foam. Thus, for producing a thin laminate which has large surface to volume ratio and hence a relatively fast cooling rate, a resin hardener system may be chosen which releases more exothermic heat than the combination chosen for a large block. It is essential that the temperature within the mass of the curing resin mixture is optimised. Too high a temperature leads to cell damage that allows the blowing agent to get out and thus the low thermal conductivity advantage is lost, probably due to the excessive pressure of the cell gases. Too low a temperature leads to a system that is slow curing and thus economically unacceptable. Therefore the optimum temperature profile has the temperature just below that which would result in cell damage throughout the curing process. Curing in all foam processes continues for a considerable time after the product has been demoulded, or, in the case of laminated foam, has come out of the conveyor press. This is often referred to as the post curing phase. It is essential that the temperature within the mass of the curing resin mixture does not exceed 85°C for at least 6 hours after the curing phase has been initiated and is preferably from 55 to 85°C.

According to a further embodiment, the present invention comprises a process for the production of block phenolic foams by curing a phenolic resin with a blowing agent, a hardener, a cell stabilizer and a solvent compatible with the resin in the reaction mixture, characterised in that in the curing mixture

(a) the phenolic resin has an aldehyde to phenolic compound mole ratio from 1:1 to 2.5:1 and in combination with any of the solvent inherently present therein has a viscosity of 500-10,000 centistokes at 25°C,

(b) the blowing agent is a mixture of Freon 113 and Freon 114,

(c) the hardener is a mineral acid,

(d) the cell stabilizer is derived by oxyalkylating castor oil or a hydrogenated derivative thereof with ethylene oxide or mixtures thereof with propylene oxide and/or butylene oxide,

(e) the total compatible solvents content of the reaction mixture inclusive of that present in the resin is from 20-35% by weight of which at least 50% by weight is water, and

(f) the temperature within the mass of the curing resin mixture does not exceed 85°C.

The reactant phenolic compounds and the aldehydes used and the respective ratios described previously also apply to the block phenolic foams of this embodiment.

In the case of producing block phenolic foams, the solvent in the resin is suitably water and the water content of the resin is from 20-35% by weight, typically from 24 to 28% by weight. In this case, if the water content is 24% by weight up to 50% of this amount of water may be replaced by other solvents compatible with the resin as defined above.

The process of the present invention enables closed cell foams with the following properties to be produced:

(i) values significantly less than 0.020 W/(m.K) after ageing for 90 days and tested as above,

(ii) improved processability, and

(iii) lower stress in finished foam.

The mixing, foaming and curing of the ingredients can be carried out by any of the methods currently employed either batchwise or continuously.

The invention is illustrated by the following Examples.

Examples (1-3) and Comparative Tests (a-c)

General Procedure

A. Resin Preparation

A phenolic resole was prepared in the conventional way. Aqueous formaldehyde (36.6%) (1.5 moles) was reacted with phenol (1 mole) using as a catalyst, sodium hydroxide (1.23% by weight of phenol

4

charged).

The reaction mixture was heated to 60°C over a 40 minute period and held at 60°C for 30 minutes. The temperature was carefully increased to 80°C and held for 30 minutes. The temperature was again increased to permit a 40 minute reflux period. Water was then vacuum distilled to give a material with water content of 10.7%. It was then held at 70°C to give a material with a viscosity of 7290 centistokes at 25°C. To 100 parts of this resin, monoethylene glycol 15.8 parts was added. The resultant resin had a viscosity of 1380 centistokes at 25°C and a water content of 9.9%.

## B. Foam Preparation

| Formulations | | |
|---|---|---|
| (i) | Resin Blend | Parts By Weight |
| (ii) (iii) | Phenolic resin (as in A above) Cell stabiliser CO + 50 EO + 15 PO Cell stabiliser CO + 40 EO Fluorocarbon blend 50% aqueous sulphuric acid | 100 1.87 3.75 15.84 18.5 |
| In the above formulation | | |
| CO represents castor oil, EO represents ethylene oxide and PO represents propylene oxide | | |

The resin blend, 200 g, was weighed out into a plastic open-topped beaker and the resin was warmed to 25°C. Then the fluorocarbon blend was added and mixed until a uniform emulsion was formed. This was followed by addition of aqueous sulphuric acid and rapid mixing. The mixture was then poured into a paper lined mould, allowed to rise, cure and set in an oven at 60°C for one hour. The foam was removed from the oven after one hour and stored at ambient temperature for 3 days before being cut and tested. The fluorocarbon blends chosen for the Examples according to the invention and for the comparative tests were formulated in order to achieve similar times to initial foam formation.

| Example No. | Fluorocarbon Blend Used | Initial "k" Value W/(m.k) | 7 Days Rapid Ageing "k" Value W/(m.k) |
|---|---|---|---|
| 1) | Freon 114/Freon 113 (35/65 w/w) | 0.0164 | 0.0195 |
| a) | Freon 11 alone | 0.0164 | 0.0291 |
| 2) | Freon 114/Freon 113 (16/84 w/w) | 0.0164 | 0.0191 |
| b) | Freon ww/Freon 113 (50/50 w/w) | 0.0165 | 0.0228 |
| 3) | Freon 114/Freon 113 (11/89 w/w) | 0.0163 | 0.0190 |
| c) | Freon 11/Freon 113 (33/67 w/w) | 0.0164 | 0.0234 |
| (a), (b) and (c) are comparative tests not according to the invention. | | | |

The thermal conductivity was measured on the Anacon model 88 thermal analyser, referred to on page 5 lines 7-11 above.

## Full Scale Laminated Foam Preparation

Examples 4 and 5 & Comparative Tests (d) and (e)

5

EP 0 336 588 A1

(General Procedure)

The phenolic resin used for this procedure was the same as that used in Examples 1 to 3 above.

| Formulation | | |
|---|---|---|
| (i) | Resin Blend | Parts By Weight |
| (ii) (iii) | Phenolic resin (as in A above) Cell stabiliser CO + 50 EO + 15 PO Cell stabiliser CO + 40 EO Fluorocarbon blend Aqueous sulphuric acid hardener (57.5%) | 100 1.87 3.75 15.84 28.5 |
| In the above formulation | | |
| CO represents castor oil, EO represents ethylene oxide and PO represents propylene oxides | | |

Continuous phenolic foam laminate was prepared using a phenolic laminator as described below. The foam components were continuously fed to a mixer and applied onto a facing of glass-tissue. Even coverage was achieved by traversing the mix head and passing the substrate over heated plattens, and under a heated carpet as described in our published EP-A-154452, (cf. Example 7). The curing mixture was then passed down a rubber belted conveyor press, heated at between 60-65°C, to allow the foam to be firm enough to be cut and handled.

The cut laminate boards were stored for a minimum of 3 days at ambient temperature prior to sampling for test purposes. Product samples cut from the laminate were tested unfaced. (Core Samples).

| Example No. | Fluorocarbon Blend Used | Initial "k" Value W/(m.k) | 7 Days Rapid Ageing "k" Value W/(m.k) |
|---|---|---|---|
| 4) | Freon 114/Freon 113 (35/65 w/w) | 0.0158 | 0.0153 |
| d) | Freon 11/Freon 113 (50/50 w/w) | 0.0160 | 0.0191 |
| 5) | Freon 114/Freon 113 (11/89 w/w) | 0.0155 | 0.0153 |
| e) | Freon 11/Freon 113 (33/67 w/w) | 0.0152 | 0.0183 |
| (d) and (e) were comparative tests not according to the invention | | | |

The thermal conductivity was measured on the Anacon model 88 thermal analyser referred to on page 5, lines 7-11 above.

Claims

1. A process for the production of closed cell phenolic foams of thermal conductivity by curing a phenolic resin with a blowing agent, a hardener, a cell stabilizer and a solvent compatible with the resin, characterised in that the blowing agent comprises a mixture of trichlorotrifluoroethane (hereafter Freon 113) and dichlorotetrafluoroethane (hereafter Freon 114).

2. A process according to claim 1 wherein the ratio by weight of Freon 113 to Freon 114 is in the range from 50:50 to 95:5 respectively.

3. A process according to claim 1 or 2 characterised in that in the curing mixture

(a) the phenolic resin has a formaldehyde to phenol mole ratio from 1:1 to 2.5:1 and in combination with any of the solvent inherently present therein has a viscosity of 500-10,000 centistokes at 25°C,

(b) the blowing agent is a mixture of Freon 113 and Freon 114,

6

(c) the hardener is a mineral acid,

(d) the cell stabilizer is derived by oxyalkylating castor oil or a hydrogenated derivative thereof with ethylene oxide or mixtures thereof with propylene oxide and/or butylene oxide,

(e) the total compatible solvents content of the reaction mixture inclusive of that present in the resin is from 7-35% by weight of which at least 40% by weight is water, and

(f) the temperature within the mass of the curing resin mixture does not exceed 85°C.

4. A process according to claim 3 wherein the phenolic resin used has a viscosity of 1000 to 8000 centistokes at 25°C.

5. A process according to claim 3 or 4 wherein the solvent in the resin is water.

6. A process according to any one of claims 3 to 5 wherein the water or solvent content of the resin is from 8-32 by weight.

7. A process according to any one of the preceding claims wherein the cell stabilizer is derived by oxyalkylating castor oil with a mixture of propylene oxide and ethylene oxide such that the oxyalkylated product contains up to 60 propylene oxide units and up to 200 ethylene oxide units.

8. A process according to any one of the preceding claims wherein the temperature within the mass of the curing resin mixture is between 55°C and 85°C.

9. A process according to claim 1 or 2 characterised in that in the curing mixture

(a) the phenolic resin has a formaldehyde to phenol mole ratio from 1:1 to 2.5:1 and in combination with any of the solvent inherently present therein has a viscosity of 500-10,000 centistokes at 25°C,

(b) the blowing agent is a mixture of Freon 113 and Freon 114,

(c) the hardener is a mineral acid,

(d) the cell stabilizer is deirved by oxyalkylating castor oil or a hydrogenated derivative thereof with ethylene oxide or mixtures thereof with propylene oxide and/or butylene oxide,

(e) the total compatible solvents content of the reaction mixture inclusive of that present in the resin is from 20-35% by weight of which at least 50% by weight is water, and

(f) the temperature within the mass of the curing resin mixture does not exceed 85°C.

10. A process according to claim 1 wherein the solvent in the resin is water and the water content of the resin is from 20-35% by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 170 357 (BP CHEMICAL LTD) <br> * Claims 1-14 * | 1-10 | C 08 J 9/14 <br> C 08 K 5/02 // <br> C 08 L 61/04 |
| Y | GB-A-2 099 434 (SUMITOMO CHEMICAL) <br> * Claims 1-4; page 3; example 1 * | 1-10 | |
| Y | FR-A-1 564 594 (ROBERT BOSCH) <br> * Claims 1-4 * | 1-10 | |

TECHNICAL FIELDS SEARCHED (Int. Cl.4)

C 08 J
C 08 K

The present search report has been drawn up for all claims

| Place of search | Date of completion of the search | Examiner |
|---|---|---|
| THE HAGUE | 11-07-1989 | OUDOT R. |

EPO FORM 1503 03.82 (P0401)